# FASCICULE DE BREVET EUROPEEN

(11) **EP 3 587 885 B1**
(45) Date de publication et mention de la délivrance du brevet: **13.09.2023**
(21) Numéro de dépôt: 19183004.1
(22) Date de dépôt: 27.06.2019
(51) Int. Cl.: F16L 37/088, B25B 9/02, B25B 27/20

(54) **SYSTÈME DE RACCORDEMENT RAPIDE ET PROCÉDÉ DE RÉALISATION**
SCHNELLANSCHLUSSSYSTEM UND HERSTELLUNGSVERFAHREN
QUICK CONNECTION SYSTEM AND MANUFACTURING METHOD

(30) Priorité: 29.06.2018 FR 1855937
(43) Date de publication de la demande: 01.01.2020
(73) Titulaire: Sogefi Air & Cooling (SAS), 78280 Guyancourt (FR)
(72) Inventeur: KREIDER, Julien, 67120 ALTORF (FR)
(74) Mandataire: Cabinet Nuss

(56) Documents cités:
- DE-A1-102011 107 016
- DE-U1- 20 015 040
- GB-A- 336 589
- KR-U- 20100 010 081
- US-A- 4 167 056
- US-B1- 6 945 137

## Description

La présente invention concerne le domaine du raccordement entre des éléments soumis à une circulation traversante de fluide, notamment gazeux, en particulier dans un contexte d'équipement de véhicules automobiles, et avantageusement dans une application de raccordement d'un conduit du type conduit d'air sous pression.

L'invention a plus spécifiquement pour objet un système de raccordement rapide, et un procédé de réalisation d'un raccordement rapide mettant en oeuvre le système précité.

Les systèmes de raccordement rapide, également dénommés connecteurs rapides, visés dans la présente sont bien connus dans l'état de la technique (voir par exemple : US 3 314 696 ; US 4 884 829 ; US 5 876 071 ; US 6 371 528 ; US 2003/005 2484 ; US 7 438 328).

De manière générique, un tel connecteur rapide comprend un embout femelle (par exemple en plastique) sur lequel est montée une agrafe ou bague de verrouillage (généralement en acier ressort), de forme générale en « U » (avec éventuellement des branches plus ou moins droites, arrondies ou convergentes).

Cet embout femelle comporte également au moins deux fentes sensiblement opposées par lesquelles les branches de l'agrafe font saillie à l'intérieur de l'ouverture de passage de l'embout femelle. L'embout mâle est adapté pour s'insérer et s'emboîter dans l'embout femelle et comprend une gorge extérieure. Lors de l'insertion de l'embout mâle, les branches de l'agrafe sont écartées (déformation élastique) par la poussée exercée par l'embout mâle sur lesdites branches, puis celles-ci reviennent en position de repos dans la gorge de l'embout mâle. Dans cette position, la déconnexion de l'emboîtement mâle/femelle est empêchée par la retenue de l'agrafe dans la gorge de l'embout mâle.

Dans l'état de la technique, l'agrafe est livrée en position de repos, et c'est l'opérateur en poussant l'embout mâle dans l'embout femelle qui écarte les branches de l'agrafe avant leur retour en position repos dans la gorge de l'embout mâle à l'état d'emboîtement final. C'est donc l'opérateur qui a à sa charge 100 % de l'effort de montage.

La fourniture d'un tel effort de manière répétée n'est pas satisfaisante du point de vue ergonomique.

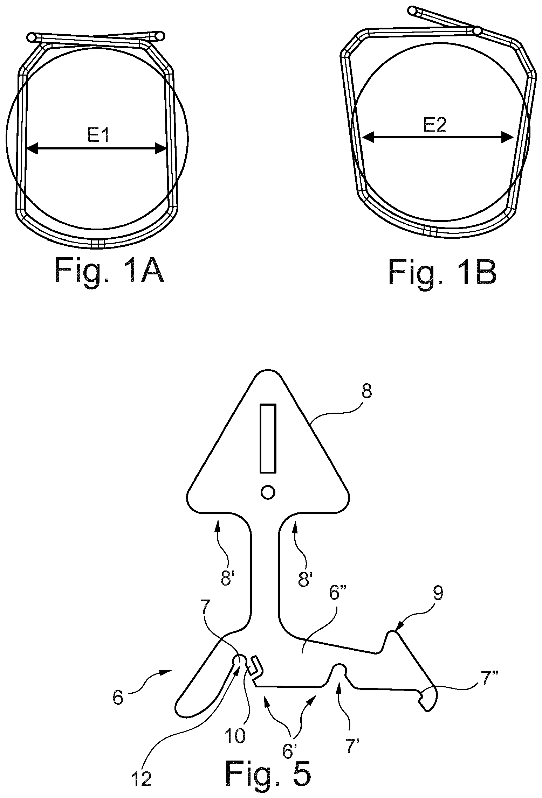

Les figures 1A et 1B illustrent, par transparence et à titre d'exemple, la déformation subie par une agrafe durant l'insertion de l'embout mâle dans l'embout femelle (l'écartement à mi-hauteur des branches de l'agrafe passe d'un écartement E1 - par exemple ≈ 39 mm - à un écartement E2 - par exemple ≈ 47 mm -, lors du passage de la plus grosse section de l'élément mâle, généralement juste avant la gorge).

On notera que l'enclenchement de l'agrafe dans la gorge s'effectue de manière audible et permet à l'opérateur d'avoir confirmation du verrouillage du raccordement, sans autre vérification, notamment visuelle.

Par le document DE 10 2011 107 016, on connaît par ailleurs un outil pour déverrouiller aisément une bague de blocage par enclenchement élastique d'un connecteur rapide, en forçant ladite bague dans une configuration contrainte permettant de libérer la connexion entre les embouts mâle et femelle.

Bien que la mise en oeuvre de cet outil lors de l'assemblage des embouts permette de réduire l'effort de poussée à exercer sur l'embout mâle lors de l'assemblage, il complique nettement l'opération d'assemblage pour l'opérateur.

Des solutions similaires, c'est-à-dire mettant en oeuvre un outil pour agir sur l'agrafe au moment de l'assemblage et faciliter cet assemblage, sont connues des documents DE 200 15 040 U et GB 336 589.

De plus, dans ces solutions connues avec mise en oeuvre d'un outil, aucune préparation en amont de l'assemblage n'est possible puisque l'intervention de l'opérateur est requise lors de l'assemblage pour manipuler l'outil (en plus de la réalisation de l'emboîtement mâle/femelle).

Le but principal de l'invention est de proposer un système mécanique de raccordement rapide qui permette de réduire notablement les efforts à fournir par l'opérateur pour réaliser l'insertion et l'emboîtement mutuels des deux embouts, tout en ne complexifiant pas les gestes à effectuer, c'est-à-dire en évitant une manipulation additionnelle durant l'assemblage, et en conservant l'aide auditive (cliquetis) de contrôle du verrouillage.

L'invention concerne plus particulièrement un système de raccordement rapide selon la revendication 1.

Dans ce type de système, l'écartement forcé des branches de l'agrafe est obtenu en pinçant ou en rapprochant les extrémités libres des brins prolongeant lesdites branches et s'étendant chacun en direction de l'autre branche du U (Fig. 1A et 1B).

Le but précité est atteint par l'invention pour un tel système par le fait qu'il comprend en outre une pièce rapportée formant élément amovible de précontrainte pour l'agrafe et comprenant des sites de logement aptes et destinés à coopérer par engagement avec les deux brins libres dans une première configuration correspondant à la configuration de repos de l'agrafe et dans au moins une seconde configuration de précontrainte de l'agrafe dans laquelle les branches du U sont plus écartées que dans la configuration de repos mais moins écartées que lors du passage de la section extérieure maximale de l'embout mâle durant son insertion dans l'embout femelle, les sites de logement étant agencés sur la pièce rapportée de précontrainte de telle manière qu'au cours de l'insertion de l'embout mâle, et avant atteinte de l'état emboîté final, l'agrafe précontrainte par ladite pièce est libérée automatiquement de sa configuration de précontrainte et peut retourner dans sa configuration de repos.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 2A à 2C illustrent, par transparence et de manière similaire aux figures 1, les différentes phases d'installation et de mise en oeuvre d'une pièce rapportée de précontrainte sur un embout femelle faisant partie d'un système de raccordement rapide selon l'invention ;
la figure 3A est une vue en perspective d'un conduit d'air pourvu d'un embout femelle tel que représenté sur les figures 2 et la figure 3B est une vue en élévation frontale de l'embout femelle à une échelle différente, avant mise en place de la pièce de précontrainte ;
les figures 4A à 4C sont des représentations par transparence, similaires à celles des figures 1 et 2, des différentes phases d'assemblage, avec insertion et emboîtement de l'embout mâle dans l'embout femelle, d'un système de raccordement rapide selon l'invention ;
la figure 5 est une vue en élévation plane d'une pièce de précontrainte faisant partie de l'invention ;
la figure 6 est une vue selon une direction opposée à celle des figures 2 et 4 et en coupe selon un plan contenant le corps de l'agrafe de la zone d'emboîtement et de raccordement entre les embouts mâle et femelle après achèvement de l'opération d'assemblage et immédiatement avant enlèvement de la pièce de précontrainte, et,
la figure 7 est une vue explosée en perspective montrant les différentes composantes constitutives du système selon l'invention.

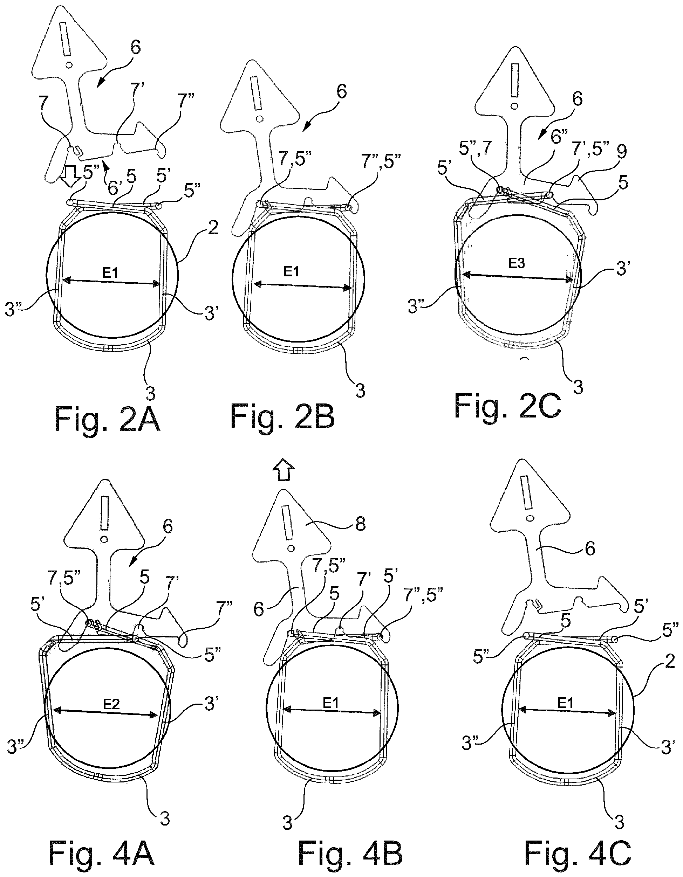

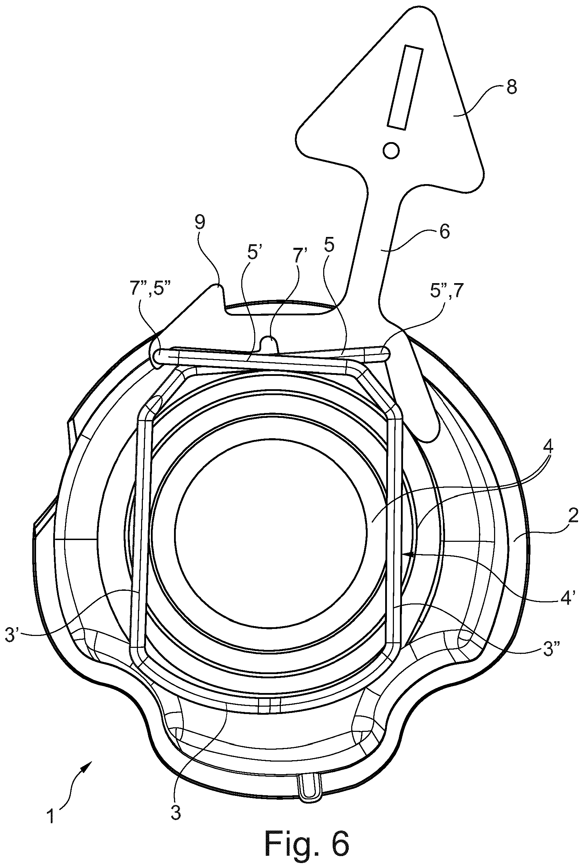

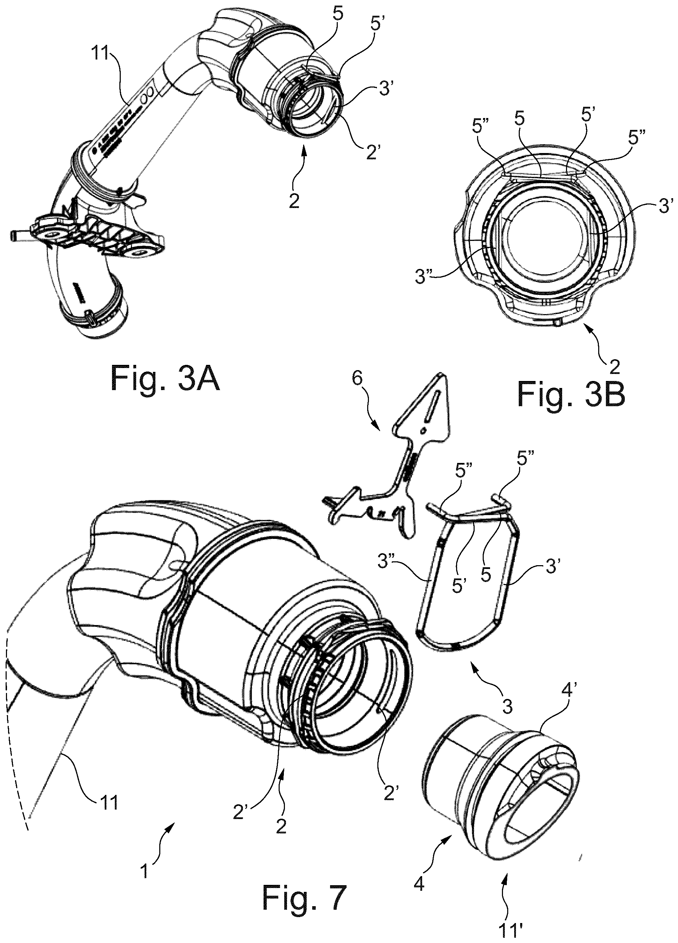

Les figures 2, 4, 6 et 7, et partiellement les figures 3, illustrent un système 1 de raccordement rapide entre un embout femelle 2 pourvu d'une agrafe 3 de verrouillage en U et un embout mâle 4 destiné à venir s'emboîter dans l'embout femelle 2. La paroi de l'embout femelle 2 comporte des fentes 2' opposées par lesquelles les branches 3', 3" du U font saillie dans le passage dudit embout 2 et la paroi de l'embout mâle 4 comporte une gorge extérieure 4' adaptée pour recevoir avec blocage lesdites branches 3', 3" de l'agrafe 3 dans un état d'emboîtement final de l'embout mâle 4 dans l'embout femelle 2, verrouillé par ladite agrafe 3. Un brin libre 5, 5' prolonge respectivement chaque branche 3', 3" du U en direction de l'autre branche 3", 3', en fermant sensiblement par coopération le U. Lesdites branches 3', 3" sont écartées élastiquement par l'embout mâle 4 lors de son insertion dans l'embout femelle 2 jusqu'à la réception de l'agrafe 3 dans la gorge 4' à l'état emboîté final des deux embouts 2 et 4, l'agrafe 3 étant alors sensiblement dans une configuration de repos, avec les branches 3', 3" du U non forcées en écartement.

Conformément à l'invention, ce système 1 comprend en outre une pièce 6 rapportée formant élément amovible de précontrainte pour l'agrafe 3 et comprenant des sites de logement 7, 7' 7" aptes et destinés à coopérer par engagement avec les deux brins libres 5, 5' dans une première configuration correspondant à la configuration de repos de l'agrafe 3 et dans au moins une seconde configuration de précontrainte de l'agrafe 3 dans laquelle les branches 3', 3" du U sont plus écartées que dans la configuration de repos mais moins écartées que lors du passage de la section extérieure maximale de l'embout mâle 4 durant son insertion dans l'embout femelle 2. Les sites de logement 7, 7', 7" sont agencés sur la pièce rapportée de précontrainte 6 de telle manière qu'au cours de l'insertion de l'embout mâle 4, et avant atteinte de l'état emboîté final, l'agrafe 3 précontrainte par ladite pièce 6 est libérée automatiquement de sa configuration de précontrainte et peut retourner dans sa configuration de repos.

Grâce aux dispositions précitées de l'invention, il est donc possible, immédiatement après mise en place de l'agrafe 3 et, en tout état de cause, avant insertion de l'embout mâle 4 pour réaliser le raccordement, de proposer une solution simple permettant de préconditionner l'agrafe 3, en l'assujettissant dans une configuration de précontrainte (pré-ouverture), ce pour réduire l'ampleur du mouvement d'écartement devant être généré par l'invention de l'embout mâle 4, et donc réduire proportionnellement l'effort de poussée à fournir par l'opérateur, ce sans mettre en oeuvre un quelconque outil lors de l'opération d'assemblage elle-même.

L'ampleur de cet écartement préliminaire forcé des branches 3', 3" (écartement E3) imposé par la pièce de précontrainte 6 est déterminé pour réduire notablement l'effort de montage, tout en garantissant un désengagement certain de la configuration de précontrainte (E2 > E3) et la possibilité d'un retour à la configuration de repos pour l'agrafe 3 avant que cette dernière ne se retrouve à hauteur de la gorge extérieure 4' de l'embout mâle 4 (état emboîté final) lors du mouvement d'insertion de cet embout. Autrement dit, le bruit d'enclenchement élastique de l'agrafe 3 dans la gorge 4' est conservé, de même que le verrouillage automatique du raccordement qui en résulte.

En plus de sa mise en oeuvre simple et peu coûteuse, la solution selon l'invention permet de préconditionner l'agrafe 3 de l'embout femelle 2 chez le fournisseur de ce dernier et de le livrer dans cet état sur le site de son assemblage avec l'embout mâle 4.

Ainsi, l'invention propose une solution mettant en oeuvre une pièce de précontrainte d'une agrafe, prémontée avec cette agrafe sur l'embout femelle et qui est libérée automatiquement lors de l'insertion de l'embout mâle (dont elle facilite d'ailleurs l'introduction en termes d'effort).

Par conséquent, la pièce de précontrainte de l'invention est prémontée et solidarisée temporairement avec l'embout femelle (sous-ensemble prémonté et manipulable : embout femelle + agrafe + pièce de précontrainte), aucune action positive sur l'agrafe de la part d'un opérateur n'étant nécessaire lors de l'assemblage pour écarter et ensuite relâcher l'agrafe (et donc verrouiller l'assemblage).

Bien entendu, différentes formes de réalisation sont possibles pour la pièce de précontrainte 6. Elle devrait néanmoins être peu coûteuse, d'un encombrement réduit et d'une construction simple, en étant adaptée au mieux aux fonctions à remplir et à son environnement d'utilisation.

En adéquation avec les attentes précitées et selon un mode de réalisation préféré de l'invention, ressortant notamment des figures 3 et 5, la pièce rapportée de précontrainte 6 peut consister en une plaquette comportant un bord 6' avec un contour fonctionnel et les sites de logement 7, 7', 7" peuvent consister en des découpes ou des formations rentrantes aptes et destinées à recevoir avec ablocage amovible les extrémités 5" des brins libres 5, 5' prolongeant les branches 3', 3" de l'agrafe en U 3, les sites de logement 7, 7', 7" présentant des formes épousant partiellement celles desdites extrémités des deux brins libres 5, 5'.

Selon une caractéristique avantageuse, ladite pièce rapportée de précontrainte 6 comporte au moins un(e) appendice ou formation de préhension 8, 9 permettant sa mise en place sur l'agrafe 3, son enlèvement de l'agrafe 3 et son déplacement lorsqu'elle est en prise avec l'agrafe 3. Préférentiellement, le passage de cette dernière de sa configuration de repos à sa configuration de précontrainte s'effectue par déplacement forcé de ladite pièce 6 en prise avec l'agrafe 3 et le passage de cette dernière de la configuration de précontrainte à la configuration de repos s'effectuant automatiquement sous l'effet d'un retour élastique des branches 3', 3" de l'agrafe en U 3, après écartement de ces dernières au-delà de l'écartement imposé par la pièce 6 dans la configuration de précontrainte.

Ainsi, le contour fonctionnel du bord 6' de la pièce 6 est configuré de telle manière que, d'une part, les brins libres 5, 5' demeurent, en fonction de la configuration, dans les sites de logement 7, 7', 7" correspondants concernés par accrochage/maintien élastique (action ressort des branches 3', 3"), et que, d'autre part, lesdits brins libres 5, 5' soient guidés et forcés (en déplacement) dans un agencement correspondant à la configuration de repos après libération/désengagement de la configuration de précontrainte.

En accord avec une construction pratique optimisée, il peut être prévu que la pièce 6 comprenne un premier site de logement 7 destiné à recevoir avec calage et verrouillage élastique l'extrémité 5" d'un premier brin 5 de l'agrafe 3, un second site de logement 7' destiné à recevoir avec calage forcé, sous la sollicitation élastique de l'agrafe 3 précontrainte, l'extrémité 5" du second brin 5' dans la configuration de précontrainte de l'agrafe 3, et un troisième site de logement 7" destiné à recevoir avec un accrochage lâche l'extrémité 5" du second brin 5' dans la configuration de repos de l'agrafe 3, le troisième site 7" étant plus éloigné du premier site 7 que le second site 7'.

Préférentiellement, le premier brin 5 est maintenu dans le premier site de logement 7 par une partie 10 de contour déformable dudit site 7, préférentiellement une portion de plaque découpée formant doigt ou lèvre flexible retenant élastiquement l'extrémité du premier brin 5 dans ledit premier site de logement 7, en rétrécissant son ouverture 12.

Cette partie 10 formant doigt ou lèvre élastiquement déformable fournit ainsi une ouverture 12 rétrécie au site de logement 7, c'est-à-dire une ouverture 12 dont la largeur est au moins légèrement inférieure au diamètre du brin 5, mais qui autorise néanmoins le passage dudit brin 5 lorsqu'un effort d'extraction est appliqué sur la pièce 6. Ladite partie 10 est ainsi conçue et configurée (portion découpée et déformée pour constituer une apostrophe ou une virgule inversée) pour réaliser une double fonction lors de la mise en oeuvre de la pièce 6 de précontrainte, à savoir :
i - jusqu'à la fin du montage : cette lèvre (ou doigt 10) assure une liaison pivot glissante permanente jusqu'à la phase d'extraction de la pièce 6. On assure de ce fait un maintien solide, à l'épreuve des sollicitations de transport et de montage. Le rétrécissement au niveau de l'ouverture 12 est conçu pour assurer l'insertion du brin dans ledit logement 7 sans arriver à plastifier la matière,
ii - durant la phase d'extraction : la flexibilité de la partie 10 en doigt ou lèvre permet un retrait de la pièce 6 avec un effort ergonomiquement acceptable.

Cet affaiblissement local au niveau du premier site de logement 7 (avec création d'un doigt ou d'une lèvre 10 déformable au niveau de l'ouverture 12 et sur une partie du logement 7 située du côté proche des autres logements 7' et 7") contribue en outre au retour automatique à la configuration de repos de l'agrafe 3, ce après passage de la section maximale de l'endroit mâle, libération de la configuration de précontrainte (par l'intermédiaire d'une rotation du brin 5 dans le site 7) et venue en imbrication dans la gorge 4'.

Conformément à un mode de réalisation pratique qui est simple, économique et adapté à une mise en oeuvre mixte, la pièce rapportée de précontrainte 6 est avantageusement une pièce sous forme de plaquette d'un seul tenant, préférentiellement venue de moulage de matière thermoplastique ou thermodure. Le corps 6" de cette plaquette comporte, d'un côté, un bord 6' à contour fonctionnel intégrant au moins trois sites de logement 7, 7', 7" mutuellement espacés et destinés à recevoir les extrémités 5" des brins libres 5, 5' de l'agrafe 3 en fonction du type de configuration de cette dernière et, de l'autre côté, un premier appendice de préhension 8 pour une manipulation, en particulier la mise en place et l'enlèvement, de ladite pièce rapportée 6 par un opérateur et un second appendice de préhension 9 pour un déplacement de ladite pièce rapportée 6 par un système robotisé, notamment un bras robot.

Afin de rappeler à l'opérateur d'enlever la pièce 6 en fin d'opération de montage, le premier appendice de préhension 8 peut présenter la forme d'un pictogramme, en particulier d'un pictogramme visuel d'avertissement, éventuellement réalisé en un matériau de couleur vive, notamment rouge, tout en présentant des zones 8' d'interfaçage aisé pour des doigts, facilitant une opération d'enlèvement par traction.

Une pièce de précontrainte 6 destinée à être mise en oeuvre dans un système 1 de raccordement rapide tel que décrit ci-dessus, et à en faire partie temporairement est aussi décrite. Cette pièce 6 est caractérisée en ce qu'elle consiste en une plaquette destinée à venir en prise avec une agrafe 3 de verrouillage en U, montée sur l'embout femelle 2 dudit système 1 de raccordement rapide et comprenant des sites de logement 7, 7', 7" aptes et destinés à coopérer par engagement avec des brins libres 5, 5' prolongeant les deux branches 3', 3" de l'agrafe 3, de manière à définir avec cette dernière, d'une part, une première configuration correspondant à une configuration de repos pour l'agrafe 3 et de verrouillage pour le système 1 de raccordement rapide à l'état emboîté final des embouts mâle et femelle 4 et 2 et, d'autre part, au moins une seconde configuration de précontrainte de l'agrafe 3 dans laquelle les branches 3', 3" du U sont plus écartées que dans la configuration de repos mais moins écartées que lors du passage de la section extérieure maximale de l'embout mâle 4 durant son insertion dans l'embout femelle 2. Les sites de logement 7, 7', 7" sont agencés sur la pièce rapportée de précontrainte 6 de telle manière qu'au cours de l'insertion de l'embout mâle 4, et avant atteinte de l'état emboîté final, l'agrafe 3 précontrainte par ladite pièce 6 est libérée automatiquement de sa configuration de précontrainte et peut retourner dans sa configuration de repos.

La pièce de précontrainte 6 consiste en une pièce sous forme de plaquette d'un seul tenant, préférentiellement venue de moulage de matière thermoplastique ou thermodure, le corps 6" de cette plaquette comportant, d'un côté, un bord 6' à contour fonctionnel intégrant au moins trois sites de logement 7, 7', 7" mutuellement espacés et destinés à recevoir les extrémités 5" des brins libres 5, 5' de l'agrafe 3 en fonction du type de configuration de cette dernière et, de l'autre côté, un premier appendice de préhension 8 pour une manipulation, en particulier la mise en place et l'enlèvement, de ladite pièce rapportée 6 par un opérateur et un second appendice de préhension 9 pour un déplacement de ladite pièce rapportée 6 par un système robotisé, notamment un bras robot, les sites de logement 7, 7' 7" comportant des ouvertures 12 dirigées à l'opposé de la direction d'extension de l'appendice 8 de préhension de la pièce de précontrainte 6 par un opérateur.

Le corps 6" de la pièce 6 comporte ainsi une base avec le bord 6' à contour fonctionnel et les sites 7, 7' 7", destinée à interagir avec l'agrafe 3, et une partie supérieure pourvue des appendices 8 et 9 précités.

Ledit corps 6" présente avantageusement une certaine épaisseur pour présenter une constitution suffisamment rigide et pour garantir une réception sûre des extrémités 5" des brins 5, 5'. Ces extrémités peuvent consister en des portions repliées (perpendiculairement au plan général de l'agrafe 3) du fil métallique plié formant ladite agrafe 3 et éventuellement comporter des épaississements ou des surmoulages.

La pièce 6 est ainsi montée dans un plan parallèle au plan des branches 3', 3" de l'agrafe 3, mais décalé par rapport à ce dernier. En outre, lorsqu'elle est montée sur l'agrafe 3, la pièce 6 peut être maintenue latéralement par celle-ci et éventuellement par une formation (épaulement) de l'embout femelle 2.

L'invention porte aussi, comme le montrent notamment les figures 3A et 3B, sur un élément 11 constitutif d'un circuit de circulation de fluide, en particulier un tube ou conduit, comportant un embout femelle 2 apte et destiné à être connecté par emboîtement à un embout mâle 4 d'un autre élément 11' dudit circuit par l'intermédiaire d'un système de raccordement rapide 1 tel que décrit ci-dessus. Cet embout femelle 2 est équipé d'une agrafe 3 de verrouillage du raccordement entre les deux embouts 2 et 4 dans leur état final d'emboîtement mutuel. Cet élément 11 est caractérisé en ce qu'il est équipé, au moins jusqu'à l'état d'emboîtement final, d'une pièce 6 amovible de précontrainte de l'agrafe 3, comme évoqué précédemment.

Enfin, l'invention vise également, selon un autre de ses aspects, un procédé de réalisation d'un raccordement entre deux éléments 11 et 11' constitutifs d'un circuit de circulation de fluide selon la revendication 8.

L'extrémité 5" du brin 5 est retenue dans le site 7 et l'extrémité 5" du brin 5' est retenue dans le site 7' sous contrainte par sollicitation élastique (figure 2C) et du fait des conformations desdits sites, alors que l'extrémité 5" du brin 5' est retenue dans le site 7" du fait de sa conformation en crochet (figures 2B et 4B).

Plus précisément, le procédé selon l'invention peut par exemple comprendre les phases opératoires suivantes :
- mise en place (par un opérateur) de la pièce 6 sur l'agrafe 3, laquelle a été préalablement montée sur l'embout femelle 2, en positionnant le premier brin 5 dans le premier site 7 et le second brin 5' dans le troisième site 7" (figures 2A et 2B - configuration de repos - obtention d'un ensemble prémonté, transportable et manipulable) ;
- passage de la configuration de repos (écartement E1) à la configuration de précontrainte pour l'agrafe 3 (écartement E3 avec E1 < E3 < E2). Cette opération peut être réalisée avantageusement par un robot qui vient en prise avec le second appendice 9 et déplace la pièce 6 à l'encontre de la sollicitation élastique des branches 3',3" du U, jusqu'à positionner le second brin 5' dans le second site 7' (figure 2C) ;
- mise en présence mutuelle d'un embout femelle 2 avec l'agrafe 3 précontrainte et d'un embout mâle 4 ;
- insertion de l'embout mâle 4 dans l'embout femelle 2 conduisant à un écartement des branches 3', 3" au-delà de la configuration de précontrainte (écartement E2 > E3), puis à un enclenchement élastique automatique (avec émission d'un bruit) desdites branches 3', 3" dans la gorge 4' de l'embout mâle 4. Ce retour instantané en configuration de repos (écartement E1) avec verrouillage de l'emboîtement est facilité par le doigt ou la lèvre flexible 10 au niveau du premier site 7 (affaiblissement de la raideur sur un côté latéral de ce site). Le premier brin 5 demeure dans le premier site 7, alors que le second brin 5' se déplace du second site 7' vers le troisième site 7" (figures 4A et 4B) ; - enlèvement de la pièce 6 par traction (figure 4C).

Bien entendu, l'invention n'est pas limitée au mode de réalisation décrit et représenté aux dessins annexés. Des modifications restent possibles, pour autant qu'elles restent dans le cadre des revendications.

## Revendications

1. Système (1) de raccordement rapide comprenant un embout femelle (2) pourvu d'une agrafe (3) de verrouillage en U et un embout mâle (4) destiné à venir s'emboîter dans l'embout femelle (2), la paroi de l'embout femelle (2) comportant des fentes (2') opposées par lesquelles les branches (3', 3") du U font saillie dans le passage dudit embout femelle (2) et la paroi de l'embout mâle (4) comportant une gorge extérieure (4') adaptée pour recevoir avec blocage lesdites branches (3', 3") de l'agrafe (3) dans un état d'emboîtement final de l'embout mâle (4) dans l'embout femelle (2), verrouillé par ladite agrafe (3), lesdites branches (3', 3") étant prolongées par des brins libres (5, 5') et écartées élastiquement par l'embout mâle (4) lors de son insertion dans l'embout femelle (2) jusqu'à la réception de l'agrafe (3) dans la gorge (4') à l'état emboîté final des deux embouts (2 et 4), l'agrafe (3) étant alors sensiblement dans une configuration de repos, avec les branches (3', 3") du U non forcées en écartement,
le système de raccordement rapide (1) comprenant en outre une pièce (6) formant élément de précontrainte pour l'agrafe (3) et comprenant des sites de logement (7, 7' 7") aptes et destinés à coopérer par engagement avec les deux brins libres (5, 5') dans une première configuration correspondant à la configuration de repos de l'agrafe (3) et dans au moins une seconde configuration de précontrainte de l'agrafe (3) dans laquelle les branches (3', 3") du U sont plus écartées que dans la configuration de repos mais moins écartées que lors du passage de la section extérieure maximale de l'embout mâle (4) durant son insertion dans l'embout femelle (2),
système de raccordement rapide (1) **caractérisé**
**en ce qu'**un brin libre (5, 5') prolonge respectivement chaque branche (3', 3") du U en direction de l'autre branche (3", 3'), en fermant sensiblement par coopération le U,
**en ce que** la pièce (6) formant élément de précontrainte pour l'agrafe (3) est une pièce rapportée amovible, et
**en ce que** les sites de logement (7, 7', 7") sont agencés sur ladite pièce rapportée de précontrainte (6) de telle manière qu'au cours de l'insertion de l'embout mâle (4), et avant atteinte de l'état emboîté final, l'agrafe (3) précontrainte par ladite pièce (6) est libérée automatiquement de sa configuration de précontrainte et peut retourner dans sa configuration de repos.

2. Système selon la revendication 1, **caractérisé en ce que** la pièce rapportée de précontrainte (6) consiste en une plaquette comportant un bord (6') avec un contour fonctionnel et **en ce que** les sites de logement (7, 7', 7") consistent en des découpes ou des formations rentrantes aptes et destinées à recevoir avec ablocage amovible les extrémités (5") des brins libres (5, 5') prolongeant les branches (3', 3") de l'agrafe en U (3), les sites de logement (7, 7', 7") présentant des formes épousant partiellement celles desdites extrémités des deux brins libres (5, 5').

3. Système selon l'une quelconque des revendications 1 et 2, **caractérisé en ce que** la pièce rapportée de précontrainte (6) comporte au moins un(e) appendice ou formation de préhension (8, 9) permettant sa mise en place sur l'agrafe (3), son enlèvement de l'agrafe (3) et son déplacement lorsqu'elle est en prise avec l'agrafe (3), le passage de cette dernière de sa configuration de repos à sa configuration de précontrainte s'effectuant par déplacement forcé de ladite pièce (6) en prise avec l'agrafe (3) et le passage de cette dernière de la configuration de précontrainte à la configuration de repos s'effectuant automatiquement sous l'effet d'un retour élastique des branches (3', 3") de l'agrafe en U (3), après écartement de ces dernières au-delà de l'écartement imposé par la pièce (6) dans la configuration de précontrainte.

4. Système selon l'une quelconque des revendications 1 à 3, **caractérisé en ce que** la pièce rapportée de précontrainte (6) comprend un premier site de logement (7) destiné à recevoir avec calage et verrouillage élastique l'extrémité (5") d'un premier brin (5) de l'agrafe (3), un second site de logement (7') destiné à recevoir avec calage forcé, sous la sollicitation élastique de l'agrafe (3) précontrainte, l'extrémité (5") du second brin (5') dans la configuration de précontrainte de l'agrafe (3), et un troisième site de logement (7") destiné à recevoir avec un accrochage lâche l'extrémité (5") du second brin (5') dans la configuration de repos de l'agrafe (3), le troisième site (7") étant plus éloigné du premier site (7) que le second site (7').

5. Système selon la revendication 4, **caractérisé en ce que** le premier brin (5) est maintenu dans le premier site de logement (7) par une partie (10) de contour déformable dudit site (7), préférentiellement une portion de plaque découpée formant doigt ou lèvre flexible retenant élastiquement l'extrémité du premier brin (5) dans ledit premier site de logement (7), en rétrécissant son ouverture (12).

6. Système selon l'une quelconque des revendications 1 à 5, **caractérisé en ce que** la pièce rapportée de précontrainte (6) est une pièce sous forme de plaquette d'un seul tenant, préférentiellement venue de moulage de matière thermoplastique ou thermodure, le corps (6") de cette plaquette comportant, d'un côté, un bord (6') à contour fonctionnel intégrant au moins trois sites de logement (7, 7', 7") mutuellement espacés et destinés à recevoir les extrémités (5") des brins libres (5, 5') de l'agrafe (3) en fonction du type de configuration de cette dernière et, de l'autre côté, un premier appendice de préhension (8) pour une manipulation, en particulier la mise en place et l'enlèvement, de ladite pièce rapportée (6) par un opérateur et un second appendice de préhension (9) pour un déplacement de ladite pièce rapportée (6) par un système robotisé, notamment un bras robot.

7. Système selon la revendication 6, **caractérisé en ce que** le premier appendice de préhension (8) présente la forme d'un pictogramme, en particulier d'un pictogramme visuel d'avertissement, éventuellement réalisé en un matériau de couleur vive, notamment rouge, tout en présentant des zones (8') d'interfaçage aisé pour des doigts, facilitant une opération d'enlèvement par traction.

8. Procédé de réalisation d'un raccordement entre deux éléments (11 et 11') constitutifs d'un circuit de circulation de fluide, un premier élément (11) comportant un embout femelle (2) équipé d'une agrafe de verrouillage en U (3) et le second élément (11') comportant un embout mâle (4), ledit procédé mettant en oeuvre un système (1) selon l'une quelconque des revendications 1 à 7, procédé **caractérisé en ce qu'**il consiste à fournir la pièce (6) de précontrainte avec des sites de logement (7, 7', 7"), à la mettre en place sur l'embout femelle (2) dans la configuration de repos de l'agrafe (3), par engagement avec calage des brins libres (5, 5') des deux branches (3', 3") de ladite agrafe (3) dans les deux sites de logement (7, 7', 7") appropriés de la pièce de précontrainte (6), à mettre sous contrainte l'agrafe (3) en déplaçant la pièce de précontrainte (6) de manière à écarter mutuellement les branches (3', 3") de l'agrafe (3) jusqu'à atteindre une nouvelle position d'engagement avec calage pour l'un au moins des brins (5, 5'), puis à insérer l'embout mâle (4) dans l'embout femelle (2) jusqu'à atteindre l'état d'emboîtement final dans lequel les branches (3', 3") de l'agrafe (3) viennent s'enclencher élastiquement dans une gorge extérieure (4') dudit embout mâle (4), lesdites branches (3', 3") ayant été écartées au-delà de leur configuration de précontrainte déterminée par la pièce (6) rapportée lors de l'insertion de l'embout mâle (4) et le ou les brins (5, 5') revenant automatiquement dans le ou les sites de logement (7, 7', 7") correspondant à la configuration de repos de l'agrafe (3) et, enfin, à enlever la pièce de précontrainte (6) par traction.

## Patentansprüche

1. Schnellanschlusssystem (1), das ein Aufnahmestück (2), das über eine U-förmige Verriegelungsklammer (3) verfügt, und ein Einsteckstück (4), das dazu bestimmt ist, in das Aufnahmestück (2) eingesteckt zu werden, beinhaltet, wobei die Wand des Aufnahmestücks (2) gegenüberliegende Schlitze (2') umfasst, durch die die Arme (3', 3") des Us in die Durchführung des Aufnahmestücks (2) hineinragen, und die Wand des Einsteckstücks (4) eine Außennut (4') umfasst, die dazu angepasst ist, die Arme (3', 3") der Klammer (3) in einem endgültigen Einsteckzustand des Einsteckstücks (4) in dem Aufnahmestück (2), der durch die Klammer (3) verriegelt ist, blockierend aufzunehmen, wobei die Arme (3', 3") durch freie Stränge (5, 5') verlängert werden und durch das Einsteckstück (4) bei seiner Einführung in das Aufnahmestück (2) elastisch aufgespreizt werden, bis die Klammer (3) im endgültigen eingesteckten Zustand der zwei Stücke (2 und 4) in der Nut (4') aufgenommen ist, wobei die Klammer (3) sich dann im Wesentlichen in einer Ruhekonfiguration befindet, in der die Arme (3', 3") des Us nicht in die Aufspreizung gezwungen sind,
wobei das Schnellanschlusssystem (1) ferner ein Teil (6) beinhaltet, das ein Vorspannelement für die Klammer (3) bildet und Empfangsstellen (7, 7', 7") beinhaltet, die dazu fähig und bestimmt sind, mit den zwei freien Strängen (5, 5') in einer ersten Konfiguration, die der Ruhekonfiguration der Klammer (3) entspricht, und in mindestens einer zweiten Vorspannkonfiguration der Klammer (3), in der die Arme (3', 3") des Us weiter aufgespreizt sind als in der Ruhekonfiguration, jedoch weniger weit aufgespreizt sind als beim Durchführen des maximalen Außenquerschnitts des Einsteckstücks (4) während seiner Einführung in das Aufnahmestück (2), durch Eingriff zusammenzuwirken,
wobei das Schnellanschlusssystem (1) **dadurch gekennzeichnet ist,**
**dass** ein freier Strang (5, 5') jeweils einen Arm (3', 3") des Us in Richtung des anderen Arms (3', 3") verlängert und dabei durch Zusammenwirken das U im Wesentlichen schließt,
**dass** das Teil (6), das ein Vorspannelement für die Klammer (3) bildet, ein entfernbares Anbauteil ist, und dass die Empfangsstellen (7, 7', 7") so an dem Vorspannanbauteil (6) eingerichtet sind, dass die Klammer (3), die durch das Teil (6) vorgespannt wird, während des Einführens des Einsteckstücks (4) und vor dem Erreichen des endgültigen eingesteckten Zustands automatisch aus ihrer Vorspannkonfiguration befreit wird und in ihre Ruhekonfiguration zurückkehren kann.

2. System nach Anspruch 1, **dadurch gekennzeichnet, dass** das Vorspannanbauteil (6) aus einem Plättchen besteht, das einen Rand (6') mit einer funktionalen Kontur umfasst, und dass die Empfangsstellen (7, 7', 7") aus Ausschnitten oder nach innen verlaufenden Ausformungen bestehen, die dazu fähig und bestimmt sind, die Enden (5") der freien Stränge (5, 5'), die die Arme (3', 3") der U-förmigen Klammer (3) verlängern, entfernbar eingespannt aufzunehmen, wobei die Empfangsstellen (7, 7', 7") Formen aufweisen, die denen der Enden der zwei freien Stränge (5, 5') teilweise angepasst sind.

3. System nach einem beliebigen der Ansprüche 1 und 2, **dadurch gekennzeichnet, dass** das Vorspannanbauteil (6) mindestens einen Greifansatz oder eine Greifausformung (8, 9) umfasst, der/die seine Anbringung an der Klammer (3), seine Entfernung von der Klammer (3) und seine Verlagerung, wenn es mit der Klammer (3) in Eingriff ist, gestattet, wobei der Übergang letzterer von ihrer Ruhekonfiguration in ihre Vorspannkonfiguration durch die erzwungene Verlagerung des Teils (6) in Eingriff mit der Klammer (3) erfolgt und der Übergang letzterer von der Vorspannkonfiguration in die Ruhekonfiguration automatisch unter Einwirkung einer Rückfederung der Arme (3', 3") der U-förmigen Klammer (3) erfolgt, nachdem diese über die Aufspreizung, die durch das Teil (6) in der Vorspannkonfiguration erzwungen wird, hinaus aufgespreizt wurden.

4. System nach einem beliebigen der Ansprüche 1 bis 3, **dadurch gekennzeichnet, dass** das Vorspannanbauteil (6) eine erste Empfangsstelle (7), die dazu bestimmt ist, das Ende (5") eines ersten Strangs (5) der Klammer (3) mit Verkeilung und elastischer Verriegelung aufzunehmen, eine zweite Empfangsstelle (7'), die dazu bestimmt ist, unter elastischer Vorbelastung der vorgespannten Klammer (3) das Ende (5") des zweiten Strangs (5') in der Vorspannkonfiguration der Klammer (3) mit erzwungener Verkeilung aufzunehmen, und eine dritte Empfangsstelle (7"), die dazu bestimmt ist, das Ende (5") des zweiten Strangs (5') in der Ruhekonfiguration der Klammer (3) mit lockerer Befestigung aufzunehmen, beinhaltet, wobei die dritte Stelle (7") weiter von der ersten Stelle (7) entfernt ist als die zweite Stelle (7').

5. System nach Anspruch 4, **dadurch gekennzeichnet, dass** der erste Strang (5) durch einen verformbaren Konturabschnitt (10) der Stelle (7) in der ersten Empfangsstelle (7) gehalten wird, wobei vorzugsweise ein ausgeschnittener Plattenabschnitt einen flexiblen Finger oder eine flexible Lippe bildet, der/die das Ende des ersten Strangs (5) in der ersten Empfangsstelle (7) elastisch zurückhält, indem er/sie ihre Öffnung (12) verengt.

6. System nach einem beliebigen der Ansprüche 1 bis 5, **dadurch gekennzeichnet, dass** das Vorspannanbauteil (6) ein Teil in Form eines einstückig ausgebildeten Plättchens ist, das vorzugsweise durch Formen eines thermoplastischen oder duroplastischen Werkstoffs erhalten wird, wobei der Körper (6") dieses Plättchens auf der einen Seite einen Rand (6') mit funktionaler Kontur, der mindestens drei Empfangsstellen (7, 7', 7") einschließt, die voneinander beabstandet und dazu bestimmt sind, die Enden (5") der freien Stränge (5, 5') der Klammer (3) in Abhängigkeit vom Konfigurationstyp letzterer aufzunehmen, und auf der anderen Seite einen ersten Greifansatz (8) für eine Handhabung, insbesondere die Anbringung und die Entfernung, des Anbauteils (6) durch einen Bediener und einen zweiten Greifansatz (9) für eine Verlagerung des Anbauteils (6) durch ein Robotersystem, insbesondere einen Roboterarm, umfasst.

7. System nach Anspruch 6, **dadurch gekennzeichnet, dass** der erste Greifansatz (8) die Form eines Piktogramms, insbesondere eines visuellen Warnpiktogramms, aufweist, das eventuell aus einem Material mit auffälliger Farbe, insbesondere Rot, hergestellt ist, und dabei für Finger bequeme Interaktionsbereiche (8') aufweist, die eine Entfernungsoperation durch Ziehen erleichtern.

8. Verfahren zur Herstellung eines Anschlusses zwischen zwei Elementen (11 und 11'), die Bestandteile eines Fluidzirkulationskreislaufs sind, wobei ein erstes Element (11) ein Aufnahmestück (2) umfasst, das mit einer U-förmigen Verrieglungsklammer (3) ausgerüstet ist, und das zweite Element (11') ein Einsteckstück (4) umfasst, wobei das Verfahren ein System (1) nach einem beliebigen der Ansprüche 1 bis 7 umsetzt,
wobei das Verfahren **dadurch gekennzeichnet ist, dass** es darin besteht, das Vorspannteil (6) mit Empfangsstellen (7, 7', 7") bereitzustellen, es in der Ruhekonfiguration der Klammer (3) an dem Aufnahmestück (2) anzubringen, indem die freien Stränge (5, 5') der zwei Arme (3', 3") der Klammer (3) in den zwei entsprechenden Empfangsstellen (7, 7', 7") des Vorspannteils (6) mit Verkeilung in Eingriff gebracht werden, die Klammer (3) unter Spannung zu setzen, indem das Vorspannteil (6) so verlagert wird, dass die Arme (3', 3") der Klammer (3) auseinander gespreizt werden, bis eine neue Eingriffsposition mit Verkeilung für mindestens einen der Stränge (5, 5') erreicht wird, dann das Einsteckstück (4) in das Aufnahmestück (2) einzuführen, bis der endgültige Einsteckzustand erreicht wird, in dem die Arme (3', 3") der Klammer (3) elastisch in eine Außennut (4') des Einsteckstücks (4) einrasten, wobei die Arme (3', 3") beim Einführen des Einsteckstücks (4) über ihre durch das Anbauteil (6) bestimmte Vorspannkonfiguration hinaus aufgespreizt wurden und der oder die Stränge (5, 5') automatisch in die eine oder die mehreren Empfangsstellen (7, 7', 7"), die der Ruhekonfiguration der Klammer (3) entsprechen, zurückkehren, und schließlich das Vorspannteil (6) durch Ziehen zu entfernen.

## Claims

1. Quick connection system (1) comprising a female end piece (2) provided with a U-shaped locking clip (3) and a male end piece (4) intended to come to nest in the female end piece (2), the wall of the female end piece (2) having opposite slots (2') through which the legs (3', 3") of the U protrude into the passage of said female end piece (2) and the wall of the male end piece (4) having an outer groove (4') designed to receive, with immobilisation, said legs (3', 3") of the clip (3) in a final nesting state of the male end piece (4) in the female end piece (2), locked by said clip (3), said legs (3', 3") being extended by free segments (5, 5') and separated elastically by the male end piece (4) during its insertion into the female end piece (2) until the clip (3) is received in the groove (4') in the final nested state of the two end pieces (2 and 4), the clip (3) then being substantially in a rest configuration, with the legs (3', 3") of the U not forced apart,
the quick connection system (1) further comprising a piece (6) forming a preloading element for the clip (3) and comprising housing sites (7, 7', 7") that are able and intended to cooperate by engagement with the two free segments (5, 5') in a first configuration corresponding to the rest configuration of the clip (3) and in at least a second preloaded configuration of the clip (3) in which the legs (3', 3") of the U are further apart than in the rest configuration but less far apart than during the passage of the maximum outer section of the male end piece (4) during its insertion into the female end piece (2),
which quick connection system (1) is **characterized in that** a free segment (5, 5') respectively extends each leg (3', 3") of the U in the direction of the other leg (3", 3'), substantially closing the U by cooperation,
**in that** the piece (6) forming a preloading element for the clip (3) is a removable added piece, and
**in that** the housing sites (7, 7', 7") are arranged on said added preloading piece (6) such that during the insertion of the male end piece (4), and before the final nested state is reached, the clip (3) preloaded by said piece (6) is released automatically from its preloaded configuration and can return to its rest configuration.

2. System according to Claim 1, **characterized in that** the added preloading piece (6) consists of a small plate having an edge (6') with a functional contour and **in that** the housing sites (7, 7', 7") consist of cutouts or reentrant formations that are able and intended to receive, with removable clamping, the ends (5") of the free segments (5, 5') extending the legs (3', 3") of the U-shaped clip (3), the housing sites (7, 7', 7") having shapes partially matching those of said ends of the two free segments (5, 5).

3. System according to either one of Claims 1 and 2, **characterized in that** the added preloading piece (6) has at least one gripping appendage or formation (8, 9) allowing it to be put in place on the clip (3), removed from the clip (3) and moved when it is engaged with the clip (3), the passage of the latter from its rest configuration to its preloaded configuration being done by forced movement of said piece (6) engaged with the clip (3) and the passage of the latter from the preloaded configuration to the rest configuration being done automatically under the effect of an elastic return of the legs (3', 3") of the U-shaped clip (3), after separation of the latter beyond the separation imposed by the piece (6) in the preloaded configuration.

4. System according to any one of Claims 1 to 3, **characterized in that** the added preloading piece (6) comprises a first housing site (7) intended to receive, with elastic locking and wedging, the end (5") of a first segment (5) of the clip (3), a second housing site (7") intended to receive, with forced wedging, under the elastic urging of the preloaded clip (3), the end (5") of the second segment (5') in the preloaded configuration of the clip (3), and a third housing site (7") intended to receive, with loose hooking, the end (5") of the second segment (5') in the rest configuration of the clip (3), the third site (7") being further from the first site (7) than the second site (7').

5. System according to Claim 4, **characterized in that** the first segment (5) is held in the first housing site (7) by a part (10) of a deformable contour of said site (7), preferentially a cutout plate portion forming a flexible lip or finger elastically retaining the end of the first segment (5) in said first housing site (7), narrowing its opening (12).

6. System according to any one of Claims 1 to 5, **characterized in that** the added preloading piece (6) is a piece in the form of a small plate in a single piece, preferentially produced by moulding thermoplastic or thermoset material, the body (6") of this small plate having, on one side, an edge (6') with functional contour integrating at least three housing sites (7, 7', 7") that are mutually spaced apart and intended to receive the ends (5") of the free segments (5, 5') of the clip (3) as a function of the type of configuration of the latter and, on the other side, a first gripping appendage (8) for manipulation, in particular the putting in place and the removal, of said added piece (6) by an operator and a second gripping appendage (9) for movement of said added piece (6) by a robotic system, in particular a robot arm.

7. System according to Claim 6, **characterized in that** the first gripping appendage (8) has the form of a pictogram, in particular a visual warning pictogram, optionally made of a material with a bright colour, in particular red, while at the same time having easy interfacing zones (8') for fingers, making an operation of removal by pulling easier.

8. Method for making a connection between two constituent elements (11 and 11') of a fluid circulation circuit, a first element (11) having a female end piece (2) equipped with a U-shaped locking clip (3) and the second element (11') having a male end piece (4), said method implementing a system (1) according to any one of Claims 1 to 7,
which method is **characterized in that** it consists in providing the preloading piece (6) with housing sites (7, 7', 7"), in putting it in place on the female end piece (2) in the rest configuration of the clip (3), by engagement with wedging of the free segments (5, 5') of the two legs (3', 3") of said clip (3) in the two appropriate housing sites (7, 7', 7") of the preloading piece (6), in placing the clip (3) under load by moving the preloading piece (6) so as to mutually separate the legs (3, 3") of the clip (3) until reaching a new position of engagement with wedging for at least one of the segments (5, 5'), then in inserting the male end piece (4) into the female end (2) until reaching the final nesting state in which the legs (3', 3") of the clip (3) come to engage elastically in an outer groove (4') of said male end piece (4), said legs (3', 3") having been separated beyond their determined preloaded configuration by the added piece (6) during the insertion of the male end piece (4) and the one or more segments (5, 5') returning automatically to the one or more housing sites (7, 7', 7") corresponding to the rest configuration of the clip (3) and, finally, in removing the preloading piece (6) by pulling.
